# EUROPEAN PATENT SPECIFICATION

(11) **EP 0 912 100 B1**
(45) Date of publication and mention of the grant of the patent: **31.10.2001**
(21) Application number: 97927022.0
(22) Date of filing: 27.06.1997
(51) Int. Cl.: A21D 8/04

(54) **Use of peptidoglutaminase in baking**
Verwendung von Peptidoglutaminase im Backvorgang
Utilisation de peptidoglutaminase pour la cuisson

(30) Priority: 01.07.1996 DK 72496
(43) Date of publication of application: 06.05.1999
(73) Proprietor: Novozymes A/S, 2880 Bagsvaerd (DK)
(72) Inventor: WAGNER, Peter, DK-2880 Bagsvaerd (DK); NIELSEN, Per, Munk, DK-2880 Bagsvaerd (DK)
(86) International application number: DK9700278
(87) International publication number: WO9800029

(56) References cited:
- WO-A-90/00010
- US-A- 3 857 967
- US-A- 5 082 672
- US-A- 5 250 305

## Description

### FIELD OF THE INVENTION

The present invention relates to a bread-improving or dough-improving composition comprising a deamidase as well as to a method of preparing a dough and/or a baked product by use of the composition and/or the enzyme.

### BACKGROUND OF THE INVENTION

In the bread-making process there are bread-improving and/or dough-improving additives, which when added to the bread dough, result in improved texture, volume, flavour and freshness of the bread as well as improved machinability of the dough.

In recent years much attention has focused on developing methods for preparing bread which is capable of staying fresh for a longer period of time and thus exhibits an increased resistance to staling.

The mechanisms underlying the biochemical interactions between the components of bread which result in staling are yet to be established. One factor believed to be involved is the retrogradation, or recrystallization, of the starch components of flour. Accordingly, use of various starch-modifying agents, in particular, enzymes, has attracted much focus; cf. JP 62-79745, EP 412 607 and EP 494 233.

Other reports in the literature have indicated that protein components of flour are an influencing factor in bread staling. However, studies reported in the literature have led to conflicting theories; cf, Martin et al (Cereal Chem.,68,498-503, 1991, A mechanism of bread firming. I. Role of starch swelling), Martin and Hoseney (Cereal Chem., 68,503-507, 1991, A mechanism of bread swelling. II. Role of starch hydrolyzing enzymes), and Erlander and Erlander (Die Starke 21:305-315, 1969, Explanation of ionic sequences in various phenomena, X. Protein-carbohydrate interactions and the mechanism for the staling of bread).

Gluten is a significant component of the protein content in wheat flour. Because approximately 35-40% of the amino acids in gluten are asparagine and glutamine, some attempts to improve gluten have focused on modifying these residues. Deamidation by acid hydrolysis has been attempted as an approach to further improve functional properties of gluten, such as solubility, viscosity, and the like. For example, acid deamidation of a gluten enriched preparation resulted in improved emulsifying properties (Matsudomi et al, Agric. Biol. Chem. 46:1583-1586, 1982, Conformation and surface properties of deamidated gluten). However, acidic deamidation of gluten can also result in adverse effects on parameters of bread dough and baking performance such as dough extensibility and specific loaf volume (Ma et al, J. Food Sci. 51:99-103, 1986, Effect of deamidation and succinylation on some physicochemical and baking properties of gluten).

EP 492 406 describes the use of a transglutaminase in the preparation of baked products. WO 90/00010 describes added agents and processing steps to reduce toughness and/or firmness in bread-like products prepared by microwave irradiation. The use of an unspecified deamidase is included as one possibility among several potential additives. However, it is further noted that deamidation to improve dough quality for conventional oven baking was not described.

It has been suggested that use of a deamidating enzyme, e.g. a peptidoglutaminase, can improve food proteins. US 5,082,672 describes a method of treating food proteins by deamidation with a peptidoglutaminase, and enhancement of its activity following an initial degradation of the substrate by hydrolysis with Alcalase™, a non-specific endo/exopeptidase complex obtained from *Bacillus liceniformis*, and/or heat treatment. US 3,857,967 describes a process for preparing food and beverages with a peptidoglutaminase obtained from *Bacillus circulans,* and furthermore, indicates that the greatest degree of deamidation requires an initial degradation of the proteinaceous substrate with non-specific exo/endo-peptidases.

### BRIEF DISCLOSURE OF THE INVENTION

It is desirable to preserve the functional advantages of deamidated proteins while avoiding the detrimental effects of acid hydrolysis on dough and bread quality. It is also desirable to achieve deamidation of gluten *in situ* which has not been previously reported in baking applications. Enzymatic deamidation is one approach that can offer additional advantages, such as mild reaction conditions, speed of reaction, and substrate specificity. Deamidation *in situ* also enables deamidation of other protein sources which may be present in dough, such as soy, milk and eggs. One example of a candidate enzyme is a deamidase.

It is the object of the present invention to provide a novel approach for achieving enzymatic improvement of the properties of a dough for the preparation of bread and other baked products and improvement of anti-staling properties of such baked products.

Accordingly, in a first aspect the present invention relates to a bread-improving and/or a dough-improving composition comprising an effective amount of a deamidase.

In the present context, a deamidase is understood to be an enzyme that predominantly catalyses the deamidation of amide-containing amino acids in proteins or peptides by removing (-NH₂) from the amide group, using water as the acyl acceptor. One example of deamidase activity is the conversion of protein- or peptide-bound glutamine to a protein- or peptide-bound glutamic acid, e.g. by peptidoglutaminase.

It will be understood that an enzyme, such as an enzyme with transglutaminase activity, is excluded from the present definition of deamidase in that the transglutaminase, in addition to catalysing the deamidation of peptide-bound glutamine, will also simultaneously crosslink glutamine residues with lysine residues, resulting in protein polymerization. In particular, a transglutaminase (EC 2.3.2.13) is an enzyme that catalyses an acyl-transfer reaction between the gamma-carboxamide groups of peptide-bound glutamine residues (acyl donor) and the primary amino groups in a variety of amine compounds (acyl acceptor), including the epsilon-amino group of lysine residue in appropriate proteins. In the absence of amine substrates, transglutaminase catalyses the deamidation of the glutamine residues by using water as the acyl acceptor. Thus transglutaminase can modify proteins by amine incorporation, crosslinking as well as by deamidation.

Analogously, an enzyme with glutaminase activity is excluded from the definition of deamidase as used herein in that the only substrate for glutaminase is free glutamine.

In the present context the terms "bread-improving composition" and "dough-improving composition" are intended to indicate compositions which, in addition to the enzyme component, may comprise other substances conventionally used in baking to improve the properties of dough and/or baked products. Examples of such components are given below.

The term "an effective amount" is intended to indicate an amount of enzyme which is sufficient for providing a measurable effect on the parameter of interest. For example, it is an amount resulting in a detectable change of at least one of the properties improved according to the present invention; in particular, at least one of the properties believed to contribute to staling (*vide* the first paragraph of the section "Detailed Disclosure of the Invention" below).

In a second aspect, the present invention relates to a method of improving dough properties and/or properties of a baked product prepared from dough which the method comprises, in the dough making process, adding an effective amount of a deamidase to the dough or dough ingredients and subjecting the resultant dough to baking under suitable conditions.

In still further aspects, the present invention relates to a dough and a baked product, respectively, produced by the present method as well as to a pre-mix comprising an effective amount of a deamidase as defined herein or a bread-improving or dough-improving composition of the invention.

In the present context, the term "pre-mix" is intended to be understood in its conventional meaning, i.e. as a mixture of baking agents, normally including flour, which has been prepared to permit storage under designated conditions and/or ease of handling in dough preparation processes. Such a pre-mix may be of convenient use in industrial and commercial bread-baking plants and facilities, as well as in retail bakeries.

Additionally, the present invention relates to the use of a deamidase as defined herein for improving properties of dough, dough production and baked products, such as bread, cookies, cakes, biscuits and the like.

In a final aspect, the present invention relates to the use of a deamidase as defined herein for improving the anti-staling properties of baked products, in particular, bread.

### DETAILED DISCLOSURE OF THE INVENTION

The use of the deamidase in accordance with the present invention provides an improved anti-staling effect as measured by, e.g. crumb firming, loss of crumb elasticity, reduced slice-ability, reduced palatability or reduced flavour.

The deamidase has an added effect of changing functional properties of the protein components that may be found in dough, such as solubility, dispersability, and the like, and therefore the deamidase may provide an improvement in one or more properties of the dough and/or a food product made from such dough.

Preferably, the deamidase to be used in the present invention is active over a broad pH range during the dough preparation or the baking process, but possibly during both process steps. It is also preferred that the enzyme is active over a broad temperature range.

In a preferred embodiment the deamidase to be used in the present invention is a peptidoglutaminase. There are presently two classes of peptidoglutaminases known: peptidyl-glutaminase (EC 3.5.1.43; Peptidoglutaminase I) which is specific for glutamine substituted at the a-amino group, and protein-glutamine glutaminase (EC 3.5.1.44; Peptidoglutaminase II) which is specific for glutamine substituted at the carboxyl position or both the a-amino and carboxyl positions. Peptidoglutaminases have been obtained from *Aspergillus japonicus*, *Bacillus circulans*, *Cryptococcus albidus*, and *Debaryomyces kloecheri* (Kikuchi M and Sakaguchi K, 1973, Agri Biol Chem 37:719-724).

It is presently contemplated that the origin of the deamidase to be used in the present invention is not critical as long as the enzyme in question has the properties mentioned above. Thus, the deamidase may be of any origin, including mammalian, plant and microbial (including bacterial or fungal) origin. Specific examples of deamidases for use in the present invention are the peptidoglutaminases referred to immediately above and in the "Background of the Invention" section, such as the enzymes described in US 3,857,967 and US 5,082,672. It is presently preferred that the enzyme is obtainable from a strain of *Bacillus,* such as a strain of *B*. *circulans*, or a strain of *Aspergillus.*

The deamidase may be obtained from the organism in question by any suitable technique, and in particular by use of recombinant DNA techniques as known in the art (c.f. Sambrook, J., et al, Molecular Cloning, Vol 1-3, A Laboratory Manual. 1989, Cold Spring Harbor Press, Cold Spring Harbor NY, USA). The use of recombinant DNA techniques normally comprises cultivation of a host cell transformed with a recombinant DNA vector, consisting of the product gene of interest inserted between an appropriate promoter and terminator, in a culture medium under conditions permitting the expression of the enzyme and recovering the enzyme from the culture. The DNA sequence may be of genomic, cDNA or synthetic origin or any mixture of these, and may be isolated or synthesised in accordance with methods known in the art. The enzyme may also be obtained from its naturally occurring source, such as a plant or organism, or relevant part thereof.

It is presently contemplated that favourable results may be obtained when the deamidase is used together with other enzymes. Therefore, the bread- and/or dough-improving composition of the invention may comprise one or more additional enzymes. Analogously, such additional enzyme(s) may be added together with the deamidase in the methods of the invention.

It is presently contemplated that the effect of using a deamidase for improving the quality of baked products may be enhanced by using the deamidase in combination with suitable proteolytic activity which is believed to be capable of increasing the exposure of the glutamine moieties of the gluten component.

Suitable proteolytic activity is understood to be endo- and/or exo-peptidase activity resulting in limited proteolysis of large molecular weight proteins such as found in gluten. When added at an effective amount, such proteolytic activity will result in an increase in the amount of protein- or peptide-bound glutamine residues available for the deamidase without producing detrimental effects on the functionality of the gluten or other proteins in baking applications. It is preferable that said enzyme is active over a broad temperature range. It is also preferable that said enzyme is active over a broad pH range.

Such effective amounts can be found for all proteolytic activities by performing baking trials in which the dosage, i.e. the amount, of proteolytic activity is systematically varied. Optimum proteolytic activity can be determined by evaluation of dough and bread quality using methods known in the art. Identification of proteolytic activities which might enhance deamidation by a deamidase may be determined by quantitating the amount of ammonia produced by the deamidase from a given protein or peptide substrate when combined with the proteolytic activity.

Examples of suitable endo-proteases include a glutamic acid and aspartic acid specific protease, e.g. the *Bacillus licheniformis* protease disclosed in WO 91/13554, a trypsin-like protease, e.g. the *Fusarium oxy sporum* protease described in WO 94/25583 and a neutral protease, e.g. the *Bacillus amyloliquefaciens* protease commercially available as Neutrase® (Novo Nordisk A/S).

Examples of a suitable exoprotease include an exoprotease derived from a strain of *Aspergillus*, e.g. *A*. *Oryzae*, such as the aminopeptidase described in WO 96/28542.

The proteolytic activity may be provided by the deamidase itself as a side activity or it may originate from a distinct protease added together with the deamidase.

It is further contemplated that one or more other types of nonproteolytic enzymes may be used in combination with the deamidase to enhance its dough- and/or bread-improving effects. Examples of such additional enzymes are a cellulase; a glycosyltransferase, in particular, a 1,4- a-glucan branching enzyme (E.C. 2.4.1.18); a hemicellulase, e.g., a pentosanase such as xylanase (useful for the partial hydrolysis of pentosans which increases the extensibility of the dough); a lipase, e.g., a phospholipase (useful for the modification of lipids present in the dough or dough constituents so as to soften the dough); an oxidoreductase, e.g. a glucose oxidase, a pyranose oxidase, a lipoxygenase, a peroxidase, a laccase, or an L-amino acid oxidase (useful in improving dough consistency); a peptidase, in particular, an exopeptidase (useful in flavour enhancement); a transglutaminase and/or an amylololytic enzyme without any α-1,4-endo-activity, such as an α-1,4-exoglucanase, or an α-1,6-endoglucanase, e.g., a β-amylase, an amyloglucosidase, a maltogenic amylase, a cyclodextrin glucanotransferase (CGTase) and the like.

The other enzyme components may be of any origin, including mammalian and plant, and preferably of microbial (including bacterial or fungal) origin. The enzymes may be obtained by conventional techniques used in the art as mentioned above.

Of particular interest is the maltogenic amylase commercially available from Novo Nordisk A/S as Novamyl®, the antistaling agents Stalingase™ available from Gist-brocades N.V., Grindamyl MaxLife™ or other products of the product line Grindamyl™ available from Grindsted Products, products of the product line Veron™ available from Röhm GmbH, the glucose oxidase available from Novo Nordisk A/S as Gluzyme®, and the lipase available from Novo Nordisk A/S as Novozym® 677.

Transglutaminase may be used as described in EP 492 406.

The enzyme(s) to be used in the present invention may be in any form suited for the use in question, e.g. in the form of a dry powder or granulate, in particular a non-dusting granulate, a liquid, in particular a stabilized liquid, or a protected enzyme. Granulates may be produced, e.g. as disclosed in US 4,106,991 and US 4,661,452 (both to Novo Industri A/S), and may optionally be coated by methods known in the art. Liquid enzyme preparations may, for instance, be stabilized by adding nutritionally acceptable stabilisers such as a sugar, a sugar alcohol or another polyol, lactic acid or another organic acid according to established methods. Protected enzymes may be prepared according to the method disclosed in EP 238 216.

Normally for inclusion in pre-mixes or flour it is advantageous that the enzyme(s) is/are in the form of a dry product, e.g. a non-dusting granulate, whereas for inclusion together with a liquid it is advantageously in a liquid form.

In addition, or as an alternative, to other enzyme components, the dough-improving and/or bread-improving composition may comprise another dough- and/or bread-improving agent conventionally used in baking, e.g. one or more of the following constituents: proteins, such as milk powder (to provide crust colour), gluten (to improve the gas retention power of weak flours), and soy (to provide additional nutrients and improve water binding); an emulsifier (to improve dough extensibility and, to some extent, the consistency of the resulting bread); granulated fat (to soften the dough and improve the texture of the bread); an oxidant, e.g. ascorbic acid, potassium bromate, potassium iodate, azodicarbon amide (ADA) or ammonium persulfate (to strengthen the gluten structure); an amino acid, e.g. L-cysteine (to improve mixing properties); a sugar; a salt, e.g. sodium chloride, calcium acetate, sodium sulfate or calcium sulphate (to make the dough firmer); flour; and starch. Such components may also be added to the dough in accordance with a method of the invention.

Examples of suitable emulsifiers are mono- or diglycerides, diacetyl tartaric acid esters of mono- or diglycerides, sugar esters of fatty acids, polyglycerol esters of fatty acids, lactic acid esters of monoglycerides, acetic acid esters of monoglycerides, polyoxyethylene stearates, phospholipids and lecithin.

The bread-improving and/or dough improving composition of the invention is typically included in the dough in an amount corresponding to 0.01-5%, more specifically between 0.1-3%.

In accordance with the method of the invention, in which a deamidase, optionally in combination with one or more other enzymes as described above, is used for the preparation of dough and/or baked products, the enzyme(s) may be added as such to the mixture from which the dough is made or to any ingredient, e.g. flour, from which the dough is to be made. Alternatively, the enzyme(s) may be added as a constituent of a dough-improving and/or a bread-improving composition as described above, either to flour or other dough ingredients, or directly to the mixture from which the dough is to be made.

The skilled person will be aware that the dosage of the enzyme(s) to be used in the method of the present invention should be adapted to the nature of both the dough and the baked product in question, including the composition of the dough and the processes used in its preparation and baking, as well as to the nature of the enzyme(s) to be used. Normally, the enzyme preparation is added in an amount corresponding to 0.01-100 mg enzyme protein per kg of flour, preferably 0.1-20 mg enzyme protein per kg of flour, ideally 0.1-10 mg enzyme protein per kg of flour.

In terms of enzyme activity, the appropriate dosage of a given deamidase, optionally in combination with other enzyme(s), for exerting the desired effect will depend on the enzyme(s) and the enzyme substrate(s) in question. The skilled person may determine a suitable enzyme unity dosage on the basis of methods known in the art.

When one or more additional enzyme activities are to be added in accordance with the method of the invention, these activities may be added separately or together with the deamidase, optionally as constituent(s) of the bread-improving and/or dough-improving composition of the invention. The other enzyme activities may be any of the above described enzymes and may be dosed in accordance with established baking practice.

As mentioned above, the deamidase, optionally in combination with other enzyme(s) as described above, is added to any mixture of dough ingredients, to the dough, or to any of the ingredients to be included in the dough. In other words, the enzyme(s) may be added in any step of the dough preparation and may be added in one, two or more steps where appropriate.

The handling of the dough and/or baking is performed in any suitable manner for the dough and/or baked product in question, typically including the steps of kneading the dough, subjecting the dough to one or more proofing treatments, and baking the product under suitable conditions, i.e. at a suitable temperature and for a sufficient period of time. For instance, the dough may be prepared by using a normal straight dough process, a sour dough process, an overnight dough method, a low-temperature and long-time fermentation method, a frozen dough method, the Chorleywood Bread process, or the Sponge and Dough process.

The dough and/or baked product prepared by the method of the invention are normally based on wheat meal or flour, optionally in combination with other types of meal or flour such as corn flour, rye meal, rye flour, oat flour or meal, soy flour, sorghum meal or flour, or potato meal or flour.

In the present context the term "baked product" is intended to include any product prepared from dough, either of a soft or a crisp character. Examples of baked products, whether of a white, light or dark type, which may advantageously be produced by the present invention, are bread (in particular white, whole-meal or rye bread), typically in the form of loaves or rolls, French baguette-type bread, pita bread, tortillas, cakes, pan-cakes, biscuits, cookies, pie crusts, crisp bread, steamed bread and the like.

The dough of the invention may be of any of the types discussed above, and may be fresh, frozen or pre-baked. The preparation of frozen dough is described by K. Kulp and K. Lorenz in "Frozen and Refrigerated Doughs and Batters."

From the above disclosure it will be apparent that the dough of the invention is normally a leavened dough or a dough to be subjected to leavening. The dough may be leavened in various ways such as by adding sodium bicarbonate or the like or by adding a leaven (fermenting dough), but it is preferred to leaven the dough by adding a suitable yeast culture such as a culture of *Saccharomyces cerevisiae* (baker's yeast). Any of the commercially available *S*. *cereviciae* strains may be employed.

As mentioned above, the present invention further relates to a pre-mix, e.g., in the form of a flour composition, of dough and/or baked products made from dough, in which the pre-mix comprises a deamidase and optionally other enzymes as specified above. The pre-mix may be prepared by mixing enzyme preparation(s) comprising the relevant enzyme(s) or a bread-improving and/or dough-improving composition of the invention comprising the enzyme(s) with a suitable carrier such as flour, starch, a sugar or a salt. The pre-mix may contain other dough-improving and/or bread-improving additives, e.g. any of the additives, including enzymes, mentioned above.

In a final aspect the invention relates to the use of a deamidase for the preparation of pasta dough, preferably prepared from durum flour or a flour of comparable quality. The dough may be prepared by use of conventional techniques and the deamidase used at a dosage similar to that described above. The deamidase is preferably of microbial origin, e.g. as disclosed herein.

Techniques which can be used to determine improvements achieved by use of the present invention are described below. The organoleptic qualities mentioned above may be evaluated using procedures well established in the baking industry, and may include, for example, the use of a panel of trained taste-testers.

### MATERIALS AND METHODS

### Determination of deamidase activity

Deamidase activity is easily analyzed by measuring the amount of ammonia liberated from the protein or peptide of interest containing the appropriate amide substrate using methods known in the art. For example, peptidoglutaminase activity may be determined as described in US 3,857,967 (Kikkoman Shoyu Co., Ltd.; Japan).

Optionally, the measurement of liberated ammonia may be followed by further analysis of the amino acids in the protein or peptide products. Another ammonia liberating enzyme, such as transglutaminase, will predominantly catalyze cross-linking between glutamine and lysine residues, which can be detected from their non-cross-linked counterparts, thereby differentiating the catalytic activity of transglutaminase from peptidoglutaminase.

### Determination of the Effect of Peptidoglutaminase

According to the present invention the effect of adding a peptidoglutaminase may be tested in dough and breads as described below.

### Preparation of White Bread (I)

The straight-dough bread-making method may be used according to AACC Method 10-10B (in Approved Methods of the American Association of Cereal Chemists, Ninth Edition, March 1995; AACC, St. Paul MN, USA).

| Basic recipe | |
|---|---|
| Wheat flour | 100% |
| Salt | 1.5 % |
| Yeast (fresh) | 4.0 % |
| Sugar | 1.5 % |
| Water | 61 % |

All percentages are by weight relative to the wheat flour.

### Procedure

1. Dough mixing (Spiral mixer):
   3 min. at 625 RPM
   3.5 min. at 1250 RPM

   The mixing time is determined and adjusted by the skilled baker so as to obtain an optimum dough consistency under the testing conditions used.
2. 1st proof 15 min. at room temperature (about 22°C), covered by a cloth
3. Scaling and shaping
4. Final proof: 55 min at 32°C, 82% RH
5. Baking: 235°C, 22 min. for rolls and 35 min for loaf.

### Preparation of White Bread (II)

The sponge-dough bread-making method may be used according to AACC Method 10-11 (in Approved Methods of the American Association of Cereal Chemists, Ninth Edition, March 1995; AACC, St. Paul MN, USA).

| Basic recipe for Sponge | |
|---|---|
| Wheat flour | 60 % |
| Yeast (compressed) | 36 % |
| Yeast Food | 2 % |
| Water | 36 % |

All percentages are by weight relative to the wheat flour.

### Procedure

1. Add water to compressed yeast
2. Add yeast food in dry form with flour
3. Mix sponge (Hobart A-120; Hobart Corp., Troy OH, USA):
   0.5 min. at 1^{st} speed
   1 min. at 2^{nd} speed

   The mixing time is determined and adjusted by the skilled baker so as to obtain an opti mum dough consistency under the testing conditions used.
4. Ferment in a fermentation cabinet: 4 hours at 30°C, 85% RH

| Basic recipe for Dough | |
|---|---|
| Wheat flour | 40 % |
| Water | 24 % |
| Sugar | 5.0% |
| Shortening | 3.0% |
| Salt | 2.0% |

All percentages are by weight relative to the wheat flour.

### Procedure

1. Add dough ingredients; begin mixer (1^{st} speed)
2. Add sponge in three approximately equal portions at 15, 25, and 35 seconds mixing time; total mixing time: 1 min
3. At 2^{nd} speed, mix to obtain an optimum dough consistency
4. Ferment in a fermentation cabinet: 30 min at 30°C, 85% RH
5. Intermediate proof: 12-15 min in fermentation cabinet
6. Mold and final proof at 35.5°C, 92% RH
7. Bake: 25 min at 218°C

### Evaluation of Staling properties of Bread

The degree of staling is determined on bread, e.g. on day 1, 3, 7 and 9 after baking. Evaluation of staleness and texture can be done according to AACC method 74-09. The principles for determination of softness and elasticity of bread crumb are as follows:
1. A slice of bread is compressed with a constant speed in a texture analyser, measuring the force for compression in g.
2. The softness of the crumb is measured as the force at 25% compression.
3. The force at 40% compression (P2) and after keeping 40% compression constant for 30 sec. (P3) is measured
and the ratio (P3/P2) is the elasticity of the crumb.

### Preparation of White Layer Cake

The method may be used according to AACC Method 10-90 (in Approved Methods of the American Association of Cereal Chemists, Ninth Edition, March 1995; AACC, St. Paul MN, USA).

| Basic recipe | |
|---|---|
| Flour | 100 % |
| Sugar | 140 % |
| Shortening | 50 % |
| Nonfat Dry Milk | 12 % |
| Dried Egg Whites | 9 % |
| Salt | 3% |
| Baking Powder and Water | determined empirically |

All percentages are by weight relative to the flour.

### Procedure

1. Combine all dry ingredients and sift well
2. Add shortening and 60% of water
3. Mix at low speed for 0.5 min in Hobart C-100 mixer
4. Mix at medium speed for 4 min
5. Add 50% of remaining water
6. Mix at low speed for 0.5 min, scrape down and mix at medium speed for 2 min
7. Add remaining water, mix at low speed for 0.5 min, scrape down and mix at medium speed for 2 min
8. Scale batter into each of two greased pans
9. Bake at 375°C or 350°C

### Evaluation of Cakes

Cakes should be graded for volume and texture on the same day as baked and can be done by the method according to AACC Method 10-90.

The internal structure may be scored for the uniformity and size of cells as well as thickness of the walls; the grain; texture, such as moisture, tenderness and softness; crumb colour; and flavour.

### Preparation of Cookies

The method may be used according to AACC Method 10-50D (in Approved Methods of the American Association of Cereal Chemists, Ninth Edition, March 1995; AACC, St. Paul MN, USA).

| Basic recipe | |
|---|---|
| Flour | 225 g |
| Water | 16 g |
| Dextrose Solution | 33 g |
| Bicarbonate of Soda | 2.5 g |
| Salt | 2.1 g |
| Sugar | 130 g |
| Shortening | 64 g |

### Procedure

1. Cream shortening, sugar, salt and soda on low speed 3 min using an electric mixer (e.g., 35 Hobart C-100)
2. Add dextrose solution and distilled water
3. Mix at low speed for 1 min
4. Mix at medium speed for 1 min
5. Add all flour and mix at low speed for 2 min
6. Scrape dough from bowl and place six portions at well-spaced points on lightly greased cookie sheet
7. Flatten dough lightly
8. Cut dough with cookie cutter
9. Bake at 205°C for 10 min

### Evaluation of Cookies

Cookie width should be measured after cooling 30 min and can be done by the method according to AACC Method 10-50D.

The width of each of the six cookies is measured in mm, then rotated 90° and remeasured to obtain the average width (W). An average thickness (T) may be obtained by measuring the cookies stacked on top of one another, then restacked in a different order. The spread factor is the ratio of W/T. However, the most sensitive and reliable estimate is the width measurement, and in some cases, thickness. Because the spread factor is a ratio of 2 empirically determined parameters, different values of W and T can result in the same W/T.

### Preparation of Biscuits

The method may be used according to AACC Method 10-31B (in Approved Methods of the American Association of Cereal Chemists, Ninth Edition, March 1995; AACC, St. Paul MN, USA).

| Basic recipe | |
|---|---|
| Flour | 228 g |
| Shortening | 40 g |
| Milk Solution¹ | 135 g |
| Bicarbonate of Soda² | 3.4 g |
| Salt² | 4.5 g |
| Monocalcium Phosphate² | 130 g |

| | |
|---|---|
| ¹50 g milk powder in 450 ml water | |
| ²omit if self-rising flour is used; use 240 g of self-rising flour | |

### Procedure

1. Sift together flour and other dry ingredients (bicarbonate of soda, salt and monocalcium phosphate, if used)
2. Add shortening to flour mixture
3. Mix, using electric mixer (e.g., Hobart, Kitchen Aid or equivalent) with timer control, at speed 1 for 15 sec
4. Mix at speed 1 for 3 min
5. Add milk solution and mix at speed 1 for 15 sec
6. Roll out dough using floured rolling pin
7. Cut dough with floured cutter
8. Place 8 dough pieces 4 cm apart on ungreased baking sheet.
9. Bake at 232°C for 10 min

### Evaluation of Biscuits

Upon removal from oven, biscuits should be removed from the baking sheet and cooled for 30 min. Measurements of the eight biscuits can be made according to AACC Method 10-31B to obtain a total weight, a total diameter and a height at the top center of each biscuit.

### Preparation of Pie Shells

The method may be used according to AACC Method 10-60 (in Approved Methods of the American Association of Cereal Chemists, Ninth Edition, March 1995; AACC, St. Paul MN, USA).

| Basic recipe | |
|---|---|
| Flour | 100% |
| Shortening | 60% |
| Salt | 3.5% |
| Water | 30-64% |

All percentages are by weight relative to the wheat flour, and all ingredients are at 10°C before mixing.

### Procedure

1. Sift flour twice
2. Add shortening to flour and cut for 5 min using electric mixer (e.g., Hobart, Kitchen Aid or equivalent) with timer control, on low speed
3. Dissolve salt in a portion of water
4. Add salt solution to flour-shortening mixture, together with additional water if necessary
5. Mix at low speed for 2 min
6. Store dough at 10°C for 24 hr

### Empty shells

7. Scale, press dough into ball
8. Roll dough, fold and roll again
9. Fold and roll a third time
10. Lay dough sheet over an inverted pie tin
11. Trim dough and prick with fork
12. Let dry for 30 min and cover with a second pan pressed down firmly
13. Bake at 218°C for 20-25 min, removing second pan after 10 min in the oven

### Filled pies

7. Scale and roll bottom crust as outlined above for empty pie shell
8. Press dough sheet into pie tin and fill with either artificial fruit acid filling (water, corn starch, sugar and citric acid crystals) or true fruit filling (cling peaches, sugar corn starch and water)
9. Scale and roll dough once for top crust
10. Place over filling, trim and cut center lightly
11. Press edge over wetted edge of bottom crust
12. Bake at 218°C for about 30 min.

### Evaluation of Pie Crusts

Viscosity may be evaluated according to AACC Method 56-80. Other parameters of empty and filled pie shells may be measured according to AACC Method 10-60 24 hr and 12 or 16 hr after baking, respectively. Pie crusts may be evaluated empirically for whether they are baked through, the edges have shrunk from edge of pan; blisters have appeared; the texture is flaky; the mouth-feel is tender; whether they are crisp or soft; the colour; and if the fruit filling has penetrated the crust.

## Claims

1. A method of preparing a dough and/or a baked product prepared from the dough comprising adding a peptidoglutaminase enzyme to the dough and/or to any ingredient of the dough and/or to any mixture of the dough ingredients.

2. The method according to claim 1, in which the peptidoglutaminase enzyme is present in a bread-improving or dough-improving composition.

3. The method according to claim 3, in which the peptidoglutaminase enzyme is added in an amount corresponding 0.01-100 mg enzyme protein per kg of flour.

4. The method according to any of claims 1-3, in which another enzyme, or another bread-improving and/or dough improving agent is added to the dough, any ingredient of the dough and/or any mixture of dough ingredients.

5. A bread-improving or a dough-improving composition comprising a peptidoglutaminase enzyme and a second component selected from the group consisting of another enzyme, a milk powder, gluten, an emulsifier, granulated fat, an oxidant, an amino acid and a sugar.

6. A bread-improving or dough-improving composition according to claim 5, in which the peptidoglutaminase is of microbial origin, in particular a *Bacillus or Aspergillus* cell.

7. A bread-improving or dough-improving composition according to claim 7, in which the peptidoglutaminase is derived from a strain of *Bacillus circulans.*

8. The bread-improving or dough-improving composition according to claim 5, wherein the second enzyme is selected from the group consisting of a cellulase, a hemicellulase, a pentosanase, a glycosyltransferase, a lipase, a protease, an oxidoreductase, a peptidase and an amylase.

9. A dough comprising a peptidoglutaminase enzyme.

10. A pre-mix for dough comprising a peptidoglutaminase enzyme and flour.

11. Use of a peptidoglutaminase in the preparation of pasta.

## Patentansprüche

1. Verfahren zur Herstellung eines Teigs und/oder eines aus dem Teig hergestellten Backprodukts, umfassend die Zugabe eines Peptidoglutaminase-Enzyms zu dem Teig und/oder zu irgendeinem Bestandteil des Teigs und/oder irgendeiner Mischung der Teigbestandteile

2. Verfahren nach Anspruch 1, worin das Peptidoglutaminase-Enzym in einer brotverbessemden oder teigverbessemden Zusammensetzung vorliegt.

3. Verfahren nach Anspruch 3, worin das Peptidoglutaminase-Enzym in einer Menge zugegeben wird, die 0,01-100 mg Enzymprotein pro kg Mehl entspricht.

4. Verfahren nach irgendeinem der Ansprüche 1-3, worin ein weiteres Enzym oder ein weiteres brotverbesserndes und/oder teigverbesserndes Mittel dem Teig, irgendeinem Bestandteil des Teigs und/oder irgendeiner Mischung von Teigbestandteilen zugegeben wird.

5. Brotverbessernde oder teigverbessernde Zusammensetzung, umfassend ein Peptidoglutaminase-Enzym und eine zweite Komponente, die aus der Gruppe, bestehend aus einem weiteren Enzym, einem Milchpulver, Gluten, einem Emulgator, granuliertem Fett, einem Oxidationsmittel, einer Aminosäure und einem Zucker, ausgewählt ist.

6. Brotverbessernde oder teigverbessernde Zusammensetzung nach Anspruch 5, worin die Peptidoglutaminase mikrobiellen Ursprungs ist, insbesondere von einer *Bacillus-* oder *Aspergillus* -Zelle stammt.

7. Brotverbessemde oder teigverbessernde Zusammensetzung nach Anspruch 6, worin die Peptidoglutaminase von einem Stamm von *Bacillus circulans* stammt.

8. Brotverbessemde oder teigverbessemde Zusammensetzung nach Anspruch 5, worin das zweite Enzym aus der Gruppe, bestehend aus einer Cellulase, einer Hemicellulase, einer Pentosanase, einer Glycosyltransferase, einer Lipase, einer Protease, einer Oxidoreduktase, einer Peptidase und einer Amylase, ausgewählt ist.

9. Teig, umfassend ein Peptidoglutaminase-Enzym.

10. Vormischung für Teig, umfassend ein Peptidoglutaminase-Enzym und Mehl.

11. Verwendung einer Peptidoglutaminase bei der Herstellung von Nudeln.

## Revendications

1. Procédé pour la préparation d'une pâte et/ou d'un produit de boulangerie préparé à partir de la pâte comprenant l'addition d'une enzyme peptidoglutaminase à la pâte et/ou à tout ingrédient de la pâte et/ou à tout mélange des ingrédients de la pâte.

2. Procédé selon la revendication 1, dans lequel l'enzyme peptidoglutaminase est présente dans une composition pour améliorer le pain ou la pâte.

3. Procédé selon la revendication 3, dans lequel l'enzyme peptidoglutaminase est ajoutée dans une quantité correspondant à 0,01-100 mg protéine enzyme par kg de farine.

4. Procédé selon l'une quelconque des revendications 1-3, dans lequel une autre enzyme ou un autre agent améliorant le pain et/ou la pâte est ajouté à la pâte, à tout ingrédient de la pâte et/ou à tout mélange des ingrédients de la pâte.

5. Composition améliorant le pain ou la pâte comprenant une enzyme peptidoglutaminase et un second composant choisi dans le groupe constitué par une autre enzyme, une poudre de lait, un gluten, un émulsifiant, une matière grasse granulée, un oxydant, un acide aminé et un sucre.

6. Composition pour améliorer le pain ou la pâte selon la revendication 5, dans laquelle la peptidoglutaminase est d'origine microbienne, en particulier un *Bacillus* ou une cellule *Aspergillus.*

7. Composition pour améliorer le pain ou la pâte selon la revendication 7, dans laquelle la peptidoglutaminase est dérivée d'une souche de *Bacillus circulans.*

8. Composition pour améliorer le pain ou la pâte selon la revendication 5, dans laquelle la seconde enzyme est choisie dans le groupe constitué par une cellulase, une hémicellulase, une pentosanase, une glycosyltransférase, une lipase, une protéase, une oxydoréductase, une peptidase et une amylase.

9. Pâte comprenant une enzyme peptidoglutaminase.

10. Pré-mélange pour la pâte comprenant une enzyme peptidoglutaminase et de la farine.

11. Utilisation d'une peptidoglutaminase dans la préparation de pasta.
